# EUROPÄISCHE PATENTSCHRIFT

(11) **EP 0 386 336 B1**
(45) Veröffentlichungstag und Bekanntmachung des Hinweises auf die Patenterteilung: **07.07.1993**
(21) Anmeldenummer: 89122958.5
(22) Anmeldetag: 12.12.1989
(51) Int. Cl.: A23L 1/24

(54) **Verfahren zur Herstellung einer mayonnaiseartigen Emulsion**
Process for preparing an emulsion resembling mayonnaise
Procédé de préparation d'une émulsion du genre mayonnaise

(30) Priorität: 09.03.1989 DE 3907677
(43) Veröffentlichungstag der Anmeldung: 12.09.1990
(73) Patentinhaber: KRAFT GENERAL FOODS R & D, INC., Zweigniederlassung München, D-81737 München (DE)
(72) Erfinder: Kortum, Olaf, D-8000 München 83 (DE)
(74) Vertreter: Huber, Bernhard, Dipl.-Chem.

(56) Entgegenhaltungen:
- EP-A- 0 085 499
- EP-A- 0 129 346
- GB-A- 1 442 377
- US-A- 4 596 715

## Beschreibung

Die Erfindung betrifft ein Verfahren zur Herstellung einer mayonnaiseartigen Emulsion mit reduziertem Fettgehalt bei gleichzeitig reduziertem Säuregehalt sowie ein entsprechendes Produkt.

Mayonnaise, Salatsaucen und Dressings sind vielverwendete Zutaten zu jeglicher Art von Salat. Diese Produkte sind Öl-in-Wasser-Emulsionen, die aus Speiseöl, Ei, Essig, Kochsalz und Gewürzen hergestellt werden. Da es aus ernährungswissenschaftlichen und physiologischen Gründen erwünscht ist, kalorienreduzierte Produkte zur Verfügung zu stellen, wurden in den letzten Jahren mayonnaiseartige Cremes entwickelt, deren Fettgehalt stark erniedrigt ist und in einem Bereich von 20 bis 60% liegt. Derartige Produkte mit reduziertem Fettgehalt können nun entweder so hergestellt werden, daß eine Dispersion von Trockenstoffen in Wasser gekocht wird und anschließend abgekühlt wird und mit dem Emulgator und Öl und Essig vermischt wird. Die so erhaltene Emulsion wird dann auf Raumtemperatur gekühlt und in einer Kolloidmühle vermahlen und kalt abgefüllt. In einer anderen Variante stellt man eine Mayonnaise her mit 80% Fettgehalt und verdünnt diese dann durch Zusatz einer Stärkelösung auf den gewünschten Fettgehalt. Bei beiden Verfahren entsteht eine Öl-in-Wasser-Emulsion, deren Stabilität nicht so groß ist, daß sie pasteurisiert werden könnte. Da andererseits gerade Produkte mit erniedrigtem Fettgehalt und daher erhöhtem Wassergehalt das Bakterienwachstum begünstigen, treten hier Haltbarkeitsprobleme auf. Salatcremes mit reduziertem Fettgehalt sind ein idealer Nährboden für Bakterien. Will man den Zusatz von Konservierungsstoffen vermeiden, so bleibt nichts anderes übrig, als den pH so weit abzusenken, daß pathogene Bakterien nicht mehr wachsen können. Dazu muß der pH-Wert so weit abgesenkt werden, daß aufgrund des relativ hohen Säuregehalts der Geschmack nachteilig beeinflußt wird.

Aus der US-A-4,596,715 ist eine Trockenmischung zur Herstellung eines Salatdressings bekannt, welches bei verringertem Kaloriengehalt trotzdem die organoleptischen Eigenschaften eines ölreichen Salatdressings aufweist. Die Herstellung einer stabilen pasteurisierbaren Emulsion läßt sich daraus nicht entnehmen.

Aus der EP-A-0 129 346 ist ein Verfahren zur Herstellung eines Nahrungsmittels auf Basis von Molkeproteinkonzentrat bekannt, welches geschmacklich einem fettreichen Nahrungsmittel entsprechen soll und durch Erhitzen einer Mischung von Molkeproteinkonzentrat mit wasserhaltigen Zusätzen unter Gelierung hergestellt wird. Die Herstellung einer mayonnaiseartigen Creme mit den oben angegebenen erwünschten Eigenschaften wird dort nicht offenbart.

Es war daher Aufgabe der Erfindung, eine mayonnaiseartige Creme zu entwickeln, deren Emulsionsstabilität so groß ist, daß sie ohne Schaden pasteurisiert werden kann und auch bei längerer Lagerung bakteriologisch einwandfrei bleibt.

Diese Aufgabe wird gelöst durch ein Verfahren zur Herstellung einer mayonnaiseartigen Emulsion, das dadurch gekennzeichnet ist, daß man eine stabile Emulsion mit 10 bis 40 Gew.-% Fett, 40 bis 70 Gew.-% Wasser und 20 bis 30 Gew.-% Zusatzstoffen herstellt, indem in einem Teil der Fettphase einen Emulgator und ein Hydrokolloid und gegebenenfalls weitere fettlösliche Zusatzstoffe dispergiert, die erhaltene Dispersion erwärmten Wasser bzw. wäßrigen Medium unter kräftigem Rühren zusetzt, anschließend Stärke und wasserlösliche Zusatzstoffe und dann den restlichen Anteil Fett zusetzt und die Mischung rührt, bis sich eine Emulsion gebildet hat, zur Einstellung des pH's auf einen Wert im Bereich von 3,5 bis 4,2 eine genußfähige Säure zugibt, die emulgierte Mischung bei einem Druck von mindestens 80 bar homogenisiert, auf eine Temperatur im Bereich von 80°C bis 100°C erhitzt, heiß abfüllt und anschliessend schnell abkühlen läßt.

Überraschenderweise gelingt es mit dem erfindungsgemäßen Verfahren, bei Einhaltung der erfindungsgemäß definierten Schritte eine stabile Öl-in-Wasser-Emulsion zu erhalten, die eine ausgezeichnete Konsistenz mit ansprechenden organoleptischen Eigenschaften verbindet, eine erhöhte Hitzestabilität aufweist, so daß das Produkt pasteurisierfähig und damit lange lagerfähig ist. Das erfindungsgemäße Verfahren eignet sich zur Herstellung von mayonnaiseartigen Cremes oder Salatsaucen mit vermindertem Fettgehalt und reduziertem Säuregehalt.

Erfindungsgemäß wird eine stabile Emulsion hergestellt, die 10 bis 40 Gew.-% Fett, 40 bis 70 Gew.-% Wasser und 20 bis 30 Gew.-% Zusatzstoffe enthält. Dazu werden zuerst in einem Teil des Fettes die fettlöslichen Zusatzstoffe dispergiert. Als Fett kann jedes bei Raumtemperatur flüssige Fett verwendet werden. Bevorzugt wird pflanzliches Öl oder eine Mischung pflanzlicher Fette, die auch gehärtete Fette enthalten kann, verwendet. Die Größe des Fettanteils, der zur Dispergierung der fettlöslichen Zusatzstoffe verwendet wird, ist nicht kritisch. Es hat sich jedoch als geeignet erwiesen, ca. ein Drittel des verwendeten Fettes zur Aufnahme der fettlöslichen Zusatzstoffe zu verwenden. Als fettlösliche Zusatzstoffe werden Emulgatoren und Hydrokolloide in der Fettphase dispergiert.

Für die Stabilisierung der Emulsion kommen Milcheiweiße wie Caseinate oder Molkenproteinkonzentrate sowie Mono-oder Diglyceride in Betracht. Die bekannten Emulgatoren auf Eiproduktbasis werden als Geschmacksgeber bevorzugt nur in einer Weise eingesetzt, daß sie nicht am Aufbau der hitzestabilen Emulsion teilnehmen, das heißt, sie werden nach der Hochdruckhomogenisierung der Emulsion zugesetzt. Sie sind für die Stabilisierung der Emulsion nicht erforderlich. Eigelb kann zur Geschmacksabrundung bevorzugt in Mengen von 1 bis 3 Gew.-%, bezogen auf das Gewicht des Endproduktes, verwendet werden. Zur Stabilisierung der Emulsion wird bevorzugt Molkeneiweiß, bevorzugt in Form eines Konzentrates reinen Proteins, verwendet. Als geeignet hat sich auch das Monoglycerid von Speisefettsäuren, verestert mit Diacetyl-Weinsäure (E 472 e) erwiesen in Konzentrationen von 0,1 bis 0,4 Gew.-%, bezogen auf das Gewicht des Endproduktes.

Zur Erlangung einer mayonnaiseartigen Textur wird weiterhin ein Hydrokolloid eingesetzt. Geeignet sind hier die an sich in der Mayonnaiseherstellung verwendeten Hydrokolloide sowie deren Mischungen. Bevorzugt wird Xanthan oder Carboxymethylcellulose verwendet.

Emulgator und Hydrokolloid werden in den für Mayonnaise üblichen Mengen eingesetzt. Der Emulgator wird der Fettphase bevorzugt in einer Menge von 0,4 bis 5,5 Gew.-%, besonders bevorzugt 1,5 bis 2 Gew.-%, jeweils bezogen auf das Gewicht der Fettphase, zugesetzt. Die Konzentration des Hydrokolloids ist abhängig von dem Wassergehalt des fertigen Produktes. Die Konzentration des Hydrokolloids wird daher bezogen auf den Wasseranteil der Mischung berechnet. Bevorzugt wird das Hydrokolloid in einer solchen Menge eingesetzt, daß 0,1 bis 0,5 Gew.-% vorhanden sind. Besonders bevorzugt wird eine Konzentration von 0,2 bis 0,3 Gew.%, bezogen auf den Wassergehalt der Mischung, verwendet.

Die Dispersion des Emulgators und des Hydrokolloids in einem Anteil des verwendeten Öles wird dem Wasser oder wäßrigen Medium, wie z.B. Magermilch, unter kräftigem Rühren zugesetzt. Bevorzugt sollte das Wasser oder wäßrige Medium zuerst auf etwa 30 bis 40°C erwärmt werden. Nach ca. 2 bis 5 Minuten rühren bildet sich eine Voremulsion, zu der dann die weiteren wasserlöslichen Zusatzstoffe gegeben werden können.

Als wesentlicher Bestandteil wird die als Stabilisator dienende Stärke zugesetzt. Als Stärke können sowohl native als auch modifizierte Stärken verwendet werden. Ebenso geeignet sind auch Mischungen von nativen und modifizierten Stärken. Bevorzugt wird Maisstärke eingesetzt, die chemisch modifiziert ist, wobei besonders bevorzugt als Modifizierung Acetyladipat-Gruppen vorhanden sind. Der Konzentrationsbereich, in dem die Stärke eingesetzt wird, ist einmal abhängig vom Wassergehalt der Mischung und andererseits von der Art der verwendeten Stärke. Bevorzugt wird die Stärke in einer solchen Menge eingesetzt, daß im Endprodukt 3 bis 8 Gew.-%, besonders bevorzugt 5 bis 6 Gew.-%, bezogen auf den freien Wasseranteil, vorhanden sind.

Eine zusätzliche Stabilisierung der Lösung kann durch Zucker in Form von Sirup oder reinem Zucker, insbesondere Glucose erreicht werden, wenn sich dies nicht nachteilig auf den Geschmack des entstehenden Produktes auswirkt. Es hat sich gezeigt, daß Zucker die Konsistenz des Produkts verbessern kann.

Der Mischung können weiterhin je nach Verwendungszweck übliche Zusatzstoffe zugesetzt werden, wie Salz, Aromastoffe, Farbstoffe oder Antioxidantien. Diese Komponenten werden in an sich bekannter Weise und in üblichen Mengen je nach gewünschtem Produkt verwendet.

Sobald sich die wasserlöslichen Zusatzstoffe in der Mischung verteilt haben, wird der restliche Anteil des Fettes zugesetzt und die Mischung so lange gerührt, bis das Fett in die Mischung einemulgiert ist.

Anschließend wird der gewünschte pH eingestellt. Der pH sollte in einem Bereich zwischen 3,5 und 4,2 liegen, da bei einem pH von mehr als 4,2 die bakteriologische Stabilität nicht mehr gewährleistet ist und es bei einem pH unter 3,5 durch die zugegebene Säure zu Geschmacksabweichungen kommt. Zur Einstellung des pH's wird eine genußfähige Säure verwendet. Da die meisten genußfähigen Säuren einen Eigengeschmack aufweisen, wird in der Regel eine Säure verwendet, die zum Geschmack des gewünschten Produktes paßt. Bevorzugt wird hierzu Essig oder Zitronensäure verwendet. Die Säure wird in einer solchen Menge eingesetzt, daß der gewünschte pH erreicht wird. Hierzu sind entweder ca. 0,2 bis 0,5 Gew.-% Essigsäure oder aber 0,25 bis 0,70 Gew.-% Zitronensäure erforderlich.

Als Essig können alle im Handel befindlichen Essigarten verwendet werden. In der Regel wird der Essig mit einer Konzentration von 10% eingesetzt. Branntweinessig ist ebenso geeignet wie Weinessige oder auch aromatisierte Essige, abhängig von der Geschmacksrichtung des herzustellenden Produktes.

Die erhaltene Emulsion wird nun zur Stabilisierung bei einem Druck von mindestens 80 bar homogenisiert. Für die Homogenisierung wird ein Hochdruckhomogenisator, wie er von verschiedenen Firmen in Handel ist, verwendet. Geeignet sind Geräte mit einstufigem oder zweistufigem manuellem und hydraulischem Hochdrucksystem. Beispielsweise kann ein von der Firma Rannie erhältlicher Hochdruckhomogenisator Model Lab. Standard Typ 12.50 mit einer Kapazität von 200 1, der mit einem manuellen einstufigen Homogenisiersystem ausgerüstet ist, verwendet werden.

Durch die Homogenisierung der sehr dünnflüssigen Emulsion, die in der Regel im einmaligen Durchfluß durch den Hochdruckhomogenisator erfolgt, wird eine Fettkügelchenzerkleinerung von 3 bis 5 µm erreicht. Diese geringe Größe ist mit für die ausgesprochene Hitzestabilität der mayonaiseartigen Emulsion im anschließenden Erhitzungsprozeß verantwortlich. Herkömmlich hergestellte Salatcremes weisen eine durchschnittliche Fettkügelchengröße von ca. 30 bis 50 µm auf.

Die bei der Homogenisierung erhaltene Emulsion ist so stabil, daß sie ohne Stabilitätsverlust auf Temperaturen bis zu 100°C erhitzt werden kann. In diesem Temperaturbereich werden alle pathogenen und unerwünschten Mikroorganismen abgetötet. Die Mischung wird so lange auf Temperaturen im Bereich von 80 bis 100°C erhitzt, bis alle unerwünschten Keime abgetötet sind. Dies ist in der Regel nach 3 bis 10 Minuten der Fall. Bei dieser Erhitzung wird außerdem die Stärke optimal verquollen, so daß eine mayonnaiseartige Konsistenz entsteht.

Um eine Kontamination beim Abfüllen zu vermeiden, ist es bevorzugt, das Produkt noch heiß in keimfreie oder keimarme Gefässe abzufüllen. Die Abfüllung sollte bei Temperaturen, die oberhalb von 72°C liegen, erfolgen. Anschließend wird die Mischung dann gekühlt. In einer anderen Variante wird die heiße Mischung zuerst abgekühlt und dann in einem geschlossenen System unter sterilen Bedingungen kalt abgefüllt.

Anschließend an die Erhitzung und Abfüllung wird das heiße Produkt auf Raumtemperatur abgekühlt. Die Abkühlung sollte so erfolgen, daß das Produkt in einem Wasserbad von 8 bis 12°C oder in einem Durchflußrieselkühler zügig in ca. 20 bis 30 Minuten auf 20 bis 25°C abgekühlt wird.

Das fertige Produkt kann dann in üblicher Weise gelagert werden und ist mindestens zwölf Monate haltbar.

Weiterer Gegenstand der Erfindung ist eine mayonnaiseartige Emulsion, die dadurch gekennzeichnet ist, daß sie 40 bis 70 Gew.-% Wasser, 10 bis 40 Gew.-% Fett, 3 bis 6 Gew.-% Stärke, 0,4 bis 0,7 Gew.-% Molkeeiweißkonzentrat, 0,1 bis 0,3 Gew.% Xanthan, 2 bis 5 Gew.-% Essig sowie gegebenenfalls Aroma- und Farbstoffe enthält.

In einer weiteren Ausführungsform enthält die mayonnaiseartige Emulsion statt des Essigs 0,25 bis 0,7% Zitronensäurepulver. Bevorzugt enthält die erfindungsgemäße Emulsion zur zusätzlichen Konsistenzverbesserung noch 1 bis 10 Gew.% Zucker in Form von Sirup oder Glucoselösung. Zur Geschmacksabrundung kann Eigelb oder Vollei zugesetzt werden.

Die Erfindung wird durch die folgenden Beispiele erläutert.

### Beispiel 1

### Salatcreme mit 20 % Fett (mit Eigelb)

Es wurde eine mayonnaiseartige Salatcreme hergestellt, die insgesamt 20 % Fett und 69 % Wasser enthielt. Dazu wurde in 4 kg Pflanzenöl 0,4 kg Molkeproteinkonzentrat und 0,15 kg Xanthan dispergiert. Diese Dispersion wurde unter kräftigem Rühren 63 kg 40°C warmem Wasser zugesetzt. Nach etwa drei Minuten rühren wurde die folgende Trockenmischung, bestehend aus 4 kg Zucker, 1,5 kg Salz, 4,8 kg modifizierte Maisstärke, 0,2 kg Gewürz-und Geschmacksstoffe unter weiterem rühren zugesetzt. Der restliche Anteil Pflanzenöles von 16 kg wurde unter fortwährendem Rühren langsam einemulgiert. Dann erfolgte die Zugabe von 3,3 kg Branntweinessig, wobei der pH-Wert von 3,7 erreicht wurde. Die erhaltene Mischung wurde bei 100 bar in einem Hochdruckhomogenisator der Firma Rannie, Model Lab. Standard Typ 12.50, der mit einem manuellen einstufigen Homogenisiersystem ausgerüstet war, homogenisiert. Schließlich wurde der so erhaltenen stabilen Emulsion zur Geschmacksabrundung noch 2,5 kg Eigelb zugesetzt.

Die komplette Mischung wurde dann kontinuierlich auf 90°C erhitzt, wobei einerseits die Stärke optimal verquollen und andererseits die Salatcreme ausreichend pasteurisiert wurde. Nach einer Haltezeit von fünf Minuten wurde das Produkt kontinuierlich auf ca. 80°C abgekühlt. Um den Pasteurisationszustand aufrechtzuerhalten, wurde die viskose Salatcreme bei mehr als 72°C in Gläser abgefüllt und anschließend im Kühlwasserstrom auf Raumtemperatur abgekühlt.

### Beispiel 2

### Salatcreme mit 40 % Fett (mit Eigelb)

Es wurde eine mayonnaiseartige Salatcreme hergestellt, die insgesamt 40 % Fett und 52 % Wasser enthielt. Dazu wurde in 4 kg Pflanzenöl 0,8 kg 60%iges Molkeproteinkonzentrat und 0,2 kg Xanthan dispergiert. Diese Dispersion wurde unter kräftigem Rühren 4 kg 40°C warmem Wasser zugesetzt. Nach etwa drei Minuten rühren wurde die folgende Trockenmischung, bestehend aus 2,5 kg Zucker, 1 kg Salz, 2,8 kg modifizierte Maisstärke, 0,2 kg Gewürz- und Geschmacksstoffe unter weiterem rühren zugesetzt. Der restliche Anteil Pflanzenöles von 36 kg wurde unter fortwährendem Rühren langsam einemulgiert. Dann erfolgte die Zugabe von 3 kg Branntweinessig, wobei der pH-Wert von 3,8 erreicht wurde. Die erhaltene Mischung wurde bei 100 bar in einem Hochdruckhomogenisator der Firma Rannie, Model Lab. Standard Typ 12.50, der mit einem manuellen einstufigen Homogenisiersystem ausgerüstet war, homogenisiert. Schließlich wurde der so erhaltenen stabilen Emulsion zur Geschmacksabrundung noch 2 kg Eigelb zugesetzt.

Die komplette Mischung wurde dann kontinuierlich auf 90°C erhitzt, wobei einerseits die Stärke optimal verquollen und andererseits die Salatcreme ausreichend pasteurisiert wurde. Nach einer Haltezeit von fünf Minuten wurde das Produkt kontinuierlich auf ca. 80°C abgekühlt. Um den Pasteurisationszustand aufrechtzuerhalten, wurde die viskose Salatcreme bei mehr als 72°C in Gläser abgefüllt und anschließend im Kühlwasserstrom auf Raumtemperatur abgekühlt.

## Patentansprüche

1. Verfahren zur Herstellung einer mayonnaiseartigen Emulsion,
**dadurch gekennzeichnet,**
daß man eine stabile Emulsion mit 10 bis 40 Gew.-% Fett, 40 bis 70 Gew.-% Wasser und 20 bis 30 Gew.-% Zusatzstoffen herstellt, indem man in einem Teil der Fettphase einen Emulgator und ein Hydrokolloid und gegebenenfalls weitere fettlösliche Zusatzstoffe dispergiert; die erhaltene Dispersion erwärmtem Wasser bzw. wäßrigem Medium unter kräftigem Rühren zusetzt, anschließend Stärke und wasserlösliche Zusatzstoffe und dann den restlichen Anteil Fett zusetzt und die Mischung rührt, bis sich eine Emulsion gebildet hat, zur Einstellung des pH's auf einen Wert im Bereich von 3,5 bis 4,2 eine genußfähige Säure zugibt und die emulgierte Mischung bei einem Druck von mindestens 80 bar homogenisiert, auf eine Temperatur im Bereich von 80° bis 100°C erhitzt und heiß abfüllt.

2. Verfahren nach Anspruch 1,
**dadurch gekennzeichnet,**
daß man die homogenisierte Mischung nach der Erhitzung bei einer Temperatur, die mindestens 72°C beträgt, abfüllt und in 20 bis 30 Minuten auf 20 bis 25°C herunterkühlt.

3. Verfahren nach Anspruch 1 oder 2,
**dadurch gekennzeichnet,**
daß man als Fett ein pflanzliches Öl oder Fett, sowie deren Mischungen, die auch gehärtete Fette enthalten können, verwendet.

4. Verfahren nach einem der vorhergehenden Ansprüche,
**dadurch gekennzeichnet,**
daß man als Emulgator Molkeneiweißkonzentrat verwendet.

5. Verfahren nach einem der vorhergehenden Ansprüche,
**dadurch gekennzeichnet,**
daß man als Hydrokolloid Xanthan und/oder modifizierte Cellulose verwendet.

6. Verfahren nach einem der vorhergehenden Ansprüche,
**dadurch gekennzeichnet,**
daß man den Emulgator in einer Konzentration von 0,4 bis 5,5 Gew.-%, bezogen auf die Fettphase und das Hydrokolloid in einer Konzentration von 0,1 bis 0,5 Gew.-%, bezogen auf die wäßrige Phase, jeweils bezogen auf das Gewicht, verwendet.

7. Verfahren nach einem der vorhergehenden Ansprüche,
**dadurch gekennzeichnet,**
daß man dem wäßrigen Medium zusätzlich noch Farbstoffe, Vitamine und/oder Antioxidantien zusetzt.

8. Verfahren nach einem der vorhergehenden Ansprüche,
**dadurch gekennzeichnet,**
daß der pH-Wert des Produktes auf einen Bereich zwischen 3,6 und 4,0 eingestellt wird.

9. Verfahren nach Anspruch 8,
**dadurch gekennzeichnet,**
daß der pH-Wert durch Zugabe von Essig oder Zitronensäure eingestellt wird.

10. Verfahren nach Anspruch 9,
**dadurch gekennzeichnet,**
daß man 0,2 bis 0,5 Gew.-% Essigsäure oder 0,25 bis 0,7 Gew.-% Zitronensäure verwendet.

11. Verfahren nach einem der vorhergehenden Ansprüche,
**dadurch gekennzeichnet,**
daß man zur Stabilisierung und Konsistenzeinstellung des Endproduktes native und/oder modifizierte Stärke verwendet.

12. Verfahren nach Anspruch 10,
**dadurch gekennzeichnet,**
daß als Stärke Acetyladipatmodifizierte Stärke verwendet wird.

13. Verfahren nach einem der vorhergehenden Ansprüche,
**dadurch gekennzeichnet,**
daß man eine mayonnaiseartige Emulsion herstellt, die 40 bis 70 Gew.-% Wasser, 10 bis 40 Gew.-% Fett, 3 bis 6 Gew.-% Stärke, 0,4 bis 0,7 Gew.-% Molkeneiweißkonzentrat, 2 bis 5 Gew.-% Essig oder 0,25 bis 0,70 Gew.-% Zitronensäure, 0,1 bis 0,3 % Xanthan sowie gegebenenfalls Aroma- und Farbstoffe enthält.

## Claims

1. A method of preparing a mayonnaise-like emulsion, characterised in that a stable emulsion with 10 to 40 % by weight of fat, 40 to 70 % by weight of water and 20 to 30 % by weight of admixtures is prepared by dispersing in a portion of the fatty phase an emulsifier and a hydrocolloid and, optionally, further fat-soluble admixtures, adding the resultant dispersion to hot water or aqueous medium while stirring vigorously, subsequently adding starch and water-soluble admixtures and then the residual portion of fat and stirring the mixture until an emulsion has formed, adding an edible acid to adjust the pH to a value in the range of from 3.5 to 4.2 and homogenising the emulsifed mixture at a pressure of at least 80 bar, heating it to a temperature in the range of from 80° to 100°C and packaging it while hot.

2. A method according to Claim 1, characterised in that, after heating to a temperature which is at least 72°C, the homogenised mixture is packaged and cooled down to 20 to 25°C within 20 to 30 minutes.

3. A method according to Claim 1 or 2, characterised in that a vegetable oil or fat, as well as mixtures thereof which can also contain hardened fat, is used as the fat.

4. A method according to any one of the preceding Claims, characterised in that a whey protein concentrate is used as the emulsifier.

5. A method according to any one of the preceding Claims, characterised in that xanthan and/or modified cellulose is used as the hydrocolloid.

6. A method according to any one of the preceding Claims, characterised in that the emulsifier is used in a concentration of from 0.4 to 5.5 % by weight, in relation to the fatty phase, and the hydrocolloid is used in a concentration of from 0.1 to 0.5 % by weight, in relation to the aqueous phase, in each case in relation to weight.

7. A method according to any one of the preceding Claims, characterised in that colourings, vitamins and/or antioxidants are additionally added to the aqueous medium.

8. A method according to any one of the preceding Claims, characterised in that the pH value of the product is adjusted to a range of between 3.6 and 4.0.

9. A method according to Claim 8, characterised in that the pH value is adjusted by the addition of vinegar or citric acid.

10. A method according to Claim 9, characterised in that 0.2 to 0.5 % by weight of acetic acid or 0.25 to 0.7 % by weight of citric acid are used.

11. A method according to any one of the preceding Claims, characterised in that native and/or modified starch is used to stabilise and adjust the consistency of the end product.

12. A method according to Claim 10, characterised in that acetyl adipate modified starch is used as the starch.

13. A method according to any one of the preceding Claims, characterised in that a mayonnaise-like emulsion is prepared which contains 40 to 70 % by weight of water, 10 to 40 % by weight of fat, 3 to 6 % by weight of starch, 0.4 to 0.7 % by weight of whey protein concentrate, 2 to 5 % by weight of vinegar or 0.25 to 0.70 % by weight of citric acid, 0.1 to 0.3 % xanthan and, optionally, flavouring and colouring substances.

## Revendications

1. Procédé pour la préparation d'une émulsion du genre mayonnaise, caractérisé en ce que l'on prépare une émulsion stable comprenant 10 à 40 % en poids de matières grasses, 40 à 70 % en poids d'eau et 20 % à 30 % en poids d'additifs, en dispersant dans une partie de la phase lipide un émulsifiant et un hydrocolloïde et le cas échéant, d'autres additifs liposolubles ; à la dispersion obtenue on ajoute de l'eau réchauffée ou un agent aqueux en agitant fortement, puis en ajoutant de l'amidon et des additifs hydrosolubles, puis la partie restante de matière grasse et l'on agite le mélange jusqu'à ce qu'il se forme une émulsion et l'on ajoute un acide propre à la consommation pour le réglage du pH à une valeur dans le domaine de 3,5 à 4,2 et l'on homogénéise le mélange émulsionné à une pression d'au moins 80 bars, on porte la température dans la plage de 80 à 100°C et l'on met en bouteilles à chaud.

2. Procédé selon la revendication 1, caractérisé en ce que l'on met en bouteilles le mélange homogénéisé après chauffage à une température d'au moins 72°C et l'on refroidit en 20 à 30 minutes à 20 jusqu'à 25°C.

3. Procédé selon la revendication 1 ou 2, caractérisé en ce qu'en tant que matière grasse, on utilise une huile ou graisse végétale ainsi que leurs mélanges qui peuvent également contenir des graisses durcies.

4. Procédé selon l'une quelconque des revendications précédentes, caractérisé en ce qu'en tant qu'agent émulsionnant, on utilise un concentré de blanc de petit-lait.

5. Procédé selon l'une quelconque des revendications précédentes, caractérisé en ce qu'en tant qu'hydrocolloïde, on utilise du xanthane et/ou de la cellulose modifiée.

6. Procédé selon l'une des revendications précédentes, caractérisé en ce que l'on utilise l'agent émulsionnant dans une concentration de 0,4 à 5,5 % en poids rapportés à la phase grasse et l'hydrocolloïde dans une concentration de 0,1 à 0,5 % en poids rapporté à la phase aqueuse, respectivement rapporté au poids.

7. Procédé selon l'une quelconque des revendications précédentes, caractérisé en ce que l'on ajoute encore au milieu aqueux des colorants, vitamines et/ou anti-oxydants.

8. Procédé selon l'une quelconque des revendications précédentes, caractérisé en ce que l'on ajuste la valeur du pH du produit dans une plage située en 3,6 et 4,0.

9. Procédé selon la revendication 8, caractérisé en ce que on ajuste la valeur du pH par addition de vinaigre ou d'acide citrique.

10. Procédé selon la revendication 9, caractérisé en ce que l'on utilise 0,2 à 0,5 % en poids d'acide acétique ou 0,25 à 0,7 % en poids d'acide citrique.

11. Procédé selon l'une quelconque des revendications précédentes, caractérisé en ce que pour la stabilisation et la mise au point de la consistance du produit final, on utilise de l'amidon natif et/ou de l'amidon modifié.

12. Procédé selon la revendication 10, caractérisé en ce qu'en tant qu'amidon, on utilise de l'amidon ou de l'acétyladipate.

13. Procédé selon l'une des revendications précédentes, caractérisé en ce que l'on prépare une émulsion du genre mayonnaise qui contient 40 à 70 % en poids d'eau, 10 à 40 % en poids de matières grasses, 3 à 6 % en poids d'amidon, 0,4 à 0,7 % en poids de concentré de blanc de petit-lait, 2 à 5 % en poids de vinaigre ou 0,25 à 0,70 % en poids d'acide citrique, 0,1 à 0,3 % de xanthane ainsi qu'éventuellement des substances aromatiques et colorantes.
